# EUROPEAN PATENT APPLICATION

(11) **EP 2 421 109 A2**
(43) Date of publication of application: **22.02.2012**
(21) Application number: 11177882.5
(22) Date of filing: 18.08.2011
(51) Int. Cl.: H02G 15/113

(54) **Splice Enclosure**

(30) Priority: 18.08.2010 CN 201020299236 U
(71) Applicant: Tyco Electronics (Shanghai) Co., Ltd., Waigaoqiao Free Trade Zone Shanghai (CN)
(72) Inventor: Yin, Hongjun, Shanghai (CN)
(74) Representative: Grünecker, Kinkeldey, Stockmair & Schwanhäusser

(57) **Abstract**

An splice enclosure, comprising: a first casing including a first engagement portion; a second casing including a second engagement portion, wherein the second casing and the first casing are closed, by engagement of the first and second engagement portions, to form a receiving chamber for receiving a splicer for splicing cables, wherein at least one of the first engagement portion and the second engagement portion is formed with at least one elongated groove for filling sealing material, the at least one elongated groove including at least one broadened portion whose cross section has an enlarged width. With the above configuration, when gel is injected into the elongated grooves and flows in the elongated grooves, gas within the elongated grooves will be compressed and accumulated at the broadened portion which is wider than other part of the elongated grooves, thus, bubble is prevented from being formed at the upper sealing surfaces of the gel, and therefore, the elastic substance formed by the gel can form even sealing surfaces.

## Description

### CROSS-REFERENCE TO RELATED APPLICATION

This application claims the benefit of Chinese Patent Application No. 201020299236.7 filed on August 18, 2010 before the State Intellectual Property Office of China, the disclosure of which is incorporated herein by reference.

### BACKGROUND OF THE INVENTION

### Field of Invention

The present invention relates to an enclosure, particularly to a splice enclosure in which a gel-injection groove is provided.

### Description of the Related Art

A splicer or joint is usually used to splice cables, feeders, optical fibers or the like, and the splicing location, where the cables, the feeders, the optical fibers or the like are spliced, needs waterproof sealing so that normal performance of the spliced cables, feeders, optical fibers or the like is ensured. A splice enclosure is developed to seal the splicer after the splicing in order to produce a dust-proof and moisture-proof effect.

A conventional splice enclosure comprises a first casing and a second casing which are connected together in a turnable manner. When the first and second casings are closed, an inner space is formed therein to receive a joint of the cables or the like. Ring-shaped grooves are provided at inner peripheries of both the first and the second casings. After gel is injected into the ring-shaped grooves, gel forms sealing surfaces at the grooves; and with the first and second casings being closed, the gel at the sealing surfaces are pressed and thus the joint of cables or the like inside the first and second casings is sealed.

In the prior art, the gel is injected into the ring-shaped groove through a gel-injection port provided at the ring-shaped groove. Because gas should be discharged from the ring-shaped groove during the gel injection, a venting port is provided in the ring-shaped groove. A protrusion is formed by the gel in the groove after the gel injection is completed, and the protrusion in turn makes the sealing surfaces uneven, and this unevenness has an adverse effect on the sealing.

### Summary of Invention

The present invention has been made to overcome or alleviate at least one aspect of the above mentioned disadvantages.

Accordingly, an object of present invention is to provide a splice enclosure in which elastic sealing material injected into elongated grooves may form even sealing surfaces, and thus a good sealing effect is obtained.

According to one aspect of present invention, an splice enclosure comprises: a first casing including a first engagement portion; a second casing including a second engagement portion, wherein the second casing and the first casing are closed, by engagement of the first and second engagement portions, to form a receiving chamber for receiving a splicer, for example, for splicing cables, wherein at least one of the first engagement portion and the second engagement portion is formed with at least one elongated groove for filling sealing material, the at least one elongated groove including at least one broadened portion whose cross section has an enlarged width.

In the above sealing splice enclosure, each elongated groove may comprise a first elongated groove, a second elongated groove and a third elongated groove which are connected in order.

In the above sealing splice enclosure, the first engagement portion comprises a first longitudinal engagement portion and a second longitudinal engagement portion which are respectively located at both sides of the receiving chamber in a substantially longitudinal direction of the enclosure; the second engagement portion comprises a third longitudinal engagement portion and a fourth longitudinal engagement portion which are respectively engaged with the first longitudinal engagement portion and the second longitudinal engagement portion; and the first elongated groove is provided in at least one of the first longitudinal engagement portion and the third longitudinal engagement portion.

Further, the second elongated groove is provided in at least one of the second longitudinal engagement portion and the fourth longitudinal engagement portion.

In the above enclosure, the first elongated groove is provided in one of the first longitudinal engagement portion and the third longitudinal engagement portion; a first protruding rib corresponding to the first elongated groove is provided on the other of the first longitudinal engagement portion and the third longitudinal engagement portion.

Further, the second elongated groove is provided in one of the second longitudinal engagement portion and the fourth longitudinal engagement portion; and a second protruding rib corresponding to the second elongated groove is provided on the other of the second longitudinal engagement portion and the fourth longitudinal engagement portion.

In the above enclosure, the first elongated groove is provided in one of the first longitudinal engagement portion and the third longitudinal engagement portion, while a first planar structure is formed on the other of the first longitudinal engagement portion and the third longitudinal engagement portion; the second elongated groove is provided in one of the second longitudinal engagement portion and the fourth longitudinal engagement portion, while a second planar structure is formed on the other of the second longitudinal engagement portion and the fourth longitudinal engagement portion.

In the above enclosure, the at least one broadened portion is provided substantially at central location(s) of the first elongated groove and/or the second elongated groove.

In the above enclosure, the first engagement portion comprises two first transverse engagement portions which are located at both sides of the receiving chamber in a substantially transverse direction of the enclosure; the second engagement portion comprises two second transverse engagement portions corresponding to the first transverse engagement portions; and each of the first and second transverse engagement portions is provided with the third elongated groove and is formed into a semicircular recess, the first and second transverse engagement portions being engaged to form openings for introducing spliced cables when the first casing and the second casing are closed.

In the above enclosure, the first casing is connected with the second casing in a turnable manner at side portions in a longitudinal direction of the enclosure.

The enclosure may further comprise a fastening device for holding the first and second casings in a closed position.

With the above configuration according to the present invention, when gel is injected into the elongated grooves and flows in the elongated grooves, gas being compressed within the elongated grooves will accumulate at the broadened portion which is wider than other part of the elongated grooves so as to prevent bubbles from being formed at the upper sealing surfaces of the gel, and therefore, the elastic substance formed by the gel can form even sealing surfaces.

### Brief Description of the Drawings

These and/or other aspects and advantages of the invention will become apparent and more readily appreciated from the following description of the embodiments, taken in conjunction with the accompanying drawings of which:
Fig. 1 is a perspective view of an splice enclosure according to an exemplary embodiment of the present invention, in which the enclosure is opened;
Fig. 2 is a plan view of Fig. 1; and
Fig. 3 is a perspective view of the splice enclosure when a splicer is sealed by the enclosure.

### Detailed Description of Preferred Embodiments

Preferred embodiments of the present invention will be described hereinafter in detail with reference to the attached drawings, wherein the like reference numerals refer to the like elements throughout the specification. These embodiments should not be construed as being limited to the embodiment set forth herein, rather for illustrative purpose.

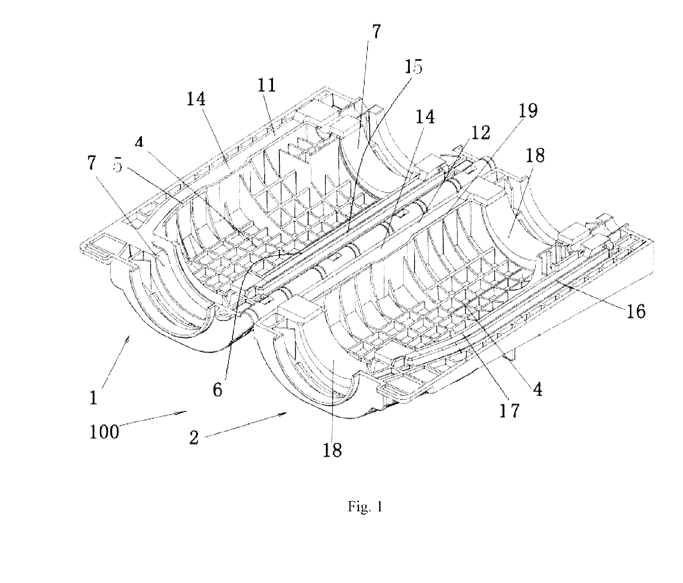

Referring to Figs. 1-3, an enclosure 100 for sealing a splicer according to an exemplary embodiment of the invention comprises a first casing 1 including a first, for example, ring-shaped, engagement portion; a second casing 2 including a second, for example, ring-shaped engagement portion, wherein the second casing 2 and the first casing 1 are closed, by means of engagement between the first and second engagement portions, to form a receiving chamber for receiving a splicer for splicing cables, optical fibers, feeders or the like (hereinafter two cables 3 are indicated or mentioned only for illustration). At least one of the first engagement portion and the second engagement portion is formed with at least one elongated groove for filling sealing material, for example, gel. Each elongated groove may comprise a first elongated groove 11, a second elongated groove 12 and a third elongated groove 13 which are connected in order (and alternatively, they may be separated from each other), the at least one elongated groove including at least one broadened portion 14 whose cross section has an enlarged width with respect to other portion of the elongated grooves. The first casing 1 and the second casing 2 may have the same shape, and main bodies thereof have a substantially arc shape in cross section. Further, each of the main bodies is formed with a substantially semicircular recess 4 at a middle portion thereof, thus, a substantially cylindrical receiving portion is formed by the two semicircular recesses 4 to receive the splicer or joints for splicing the two cables 3 when the first and second casings 1 and 2 are engaged together.

The first casing 1 may be connected with the second casing 2 in a turnable manner at side portions in a longitudinal direction of the enclosure. Specifically, the first and second casings may be connected by a hinge, a pivot or a pin, or may be connected together in a foldable manner. The first elongated groove 11, the second elongated groove 12, the third elongated groove 13 may be communicated in sequence to form a ring-shaped elongated groove at the first and/or second engagement portion.

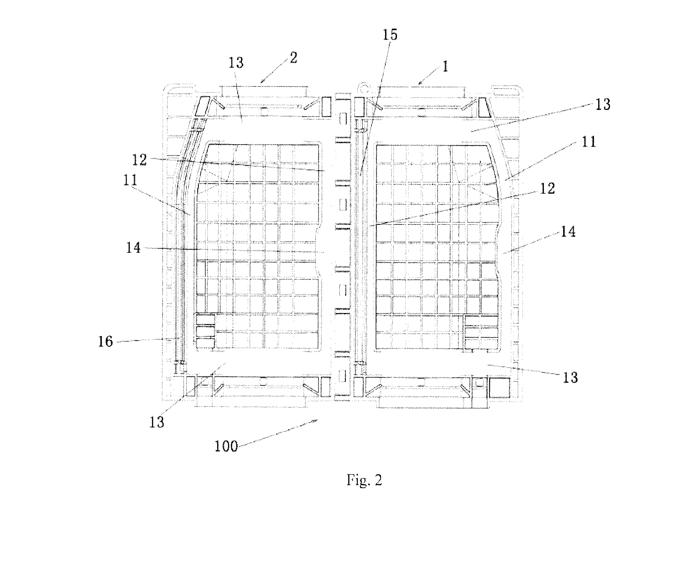

In a further embodiment of the present invention, the first engagement portion of the first casing 1 comprises a first longitudinal engagement portion 5 and a second longitudinal engagement portion 6 which are respectively located at both sides of the receiving chamber substantially in a longitudinal direction (length direction) of the enclosure 100; and the second engagement portion of the second casing 2 comprises a third longitudinal engagement portion 17 and a fourth longitudinal engagement portion 19 which are respectively located at both sides of the receiving chamber substantially in the longitudinal direction of the enclosure 100. The third longitudinal engagement portion 17 and the fourth longitudinal engagement portion 19 are in correspondence with the first longitudinal engagement portion 5 and the second longitudinal engagement portion 6, respectively, so that the third longitudinal engagement portion 17 and the fourth longitudinal engagement portion 19 are in close engagement with the first longitudinal engagement portion 5 and the second longitudinal engagement portion 6, respectively , when the first casing 1 and the second casing 2 are closed. In addition, the first elongated groove 11 is provided at one or two of the first longitudinal engagement portion 5 and the third longitudinal engagement portion 17 (that is, the two engagement portions away from the connected sides in figures 1 and 2), and the second elongated groove 12 is provided at one or two of the second longitudinal engagement portion 6 and the fourth longitudinal engagement portion 19 (that is, the two engagement portions near the connected sides in figures 1 and 2).

Further, the first elongated groove 11 is provided at one (for example, the first longitudinal engagement portion 5) of the first longitudinal engagement portion 5 and the third longitudinal engagement portion 17; and a first protruding rib 16 corresponding to the first elongated groove 11 is provided at the other (for example, the third longitudinal engagement portion 17) of the first longitudinal engagement portion 5 and the third longitudinal engagement portion 17. Similarly, the second elongated groove 12 is provided at one (for example, the fourth longitudinal engagement portion 19) of the second longitudinal engagement portion 6 and the fourth longitudinal engagement portion 19; and a second protruding rib 15 corresponding to the second elongated groove 12 is provided at the other (for example, the second longitudinal engagement portion 6) of the second longitudinal engagement portion 6 and the fourth longitudinal engagement portion 19.

In an exemplary embodiment, the at least one broadened portion 14 is provided substantially at central location(s) of the first elongated groove 11 and/or the second elongated groove 12.

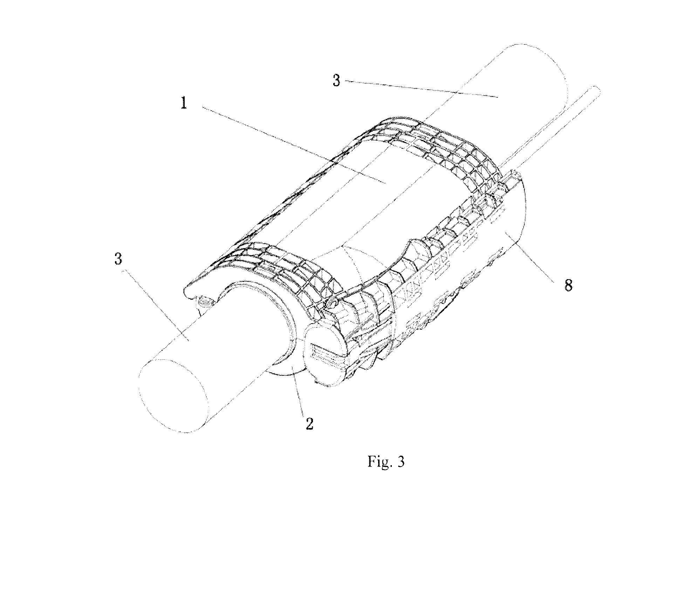

In a further exemplary embodiment, the first engagement portion further comprises two first transverse engagement portions 7 which are located at both sides of the receiving chamber substantially in a transverse direction (width direction) of the enclosure 100; and the second engagement portion further comprises two second transverse engagement portions 18, corresponding to the first transverse engagement portions 7, which are located at both sides of the receiving chamber substantially in the transverse direction of the enclosure 100. Each of the first and second transverse engagement portions 7 and 18 is provided with the third elongated groove 13 and is formed into a generally semicircular recess (refer to figure 1), the third elongated groove 13 running along the semicircular recess. Thus, when the first casing 1 and the second casing 2 are closed, the first and second transverse engagement portions 7 and 18 are engaged together to form substantially circular openings for introducing spliced cables 3 (refer to figure 3), and at the same time, the splicer or the joint having a larger size than the diameters of the cables 3 is received in the receiving chamber defined by the first and second casings 1 and 2.

Next, an operation process of the enclosure according to the present invention will be described. First, the first casing 1 and the second casing 2 are opened from the sides that are not hinged; then, the first elongated groove 11, the second elongated groove 12 and the third elongated groove 13 are covered by a mould or die shaped to fit with the first elongated groove 11, the second elongated groove 12 and the third elongated groove 13; then, melt gel having a certain elasticity is injected into the elongated grooves through an opening of the mould ; then, when the gel in the elongated grooves forms a ring-shaped sealing surface, splicer or joint for two cables 13 are placed in one casing (for example, in the first casing 1) and the cables 13 extend through the semicircular recesses respectively; then, the other casing (for example, the second casing 2) is turned or folded so that the two casings are in close engagement, in this case, the strip-shaped protruding rib 16 at the second casing 2 is in close contact with the elastic gel in the corresponding first elongated groove 11 of the first casing 1, the strip-shaped protruding rib 15 at the first casing 1 is in close contact with the elastic gel in the corresponding second elongated groove 12 of the second casing 2, and at the same time, the gel in the third elongated grooves 13 is in close contact with the cables 3, such that the splicer or joint for the cables 3 is sealed within the enclosure of the present invention.

According to the enclosure of the present invention, when the gel is injected into the elongated grooves and flows in the elongated grooves, gas within the elongated grooves will be compressed and accumulated at a part of the broadened portion 14 which is wider than other part of the elongated grooves so as to prevent bubbles from being formed at the upper sealing surfaces of the gel, and therefore, the elastic substance formed by the gel can form even sealing surfaces. Those skilled in the art will appreciate that a different number of broadened portions 14 may be provided if necessary, and the broadened portion 14 may be used as an injection portion for injecting the gel; the broadened portion 14 may be positioned at generally central locations of the first and second elongated grooves, or be positioned to be deviated from the central locations.

Though one of the two corresponding engagement portions is provided with a elongated groove, and the other is provided with a protruding rib, the present invention is not limited to this. In an alternative embodiment, one of the first longitudinal engagement portion 5 and the third longitudinal engagement portion 17 is provided with the first elongated groove 11, while the other of the first longitudinal engagement portion 5 and the third longitudinal engagement portion 17 is formed into the first planar structure; and one of the second longitudinal engagement portion 6 and the fourth longitudinal engagement portion 19 is provided with the second elongated groove 12, while the other of the second longitudinal engagement portion 6 and the fourth longitudinal engagement portion 19 is formed into the second planar structure. Hence, after the gel is injected into the first and second elongated grooves 11, 12 and the first and second casings 1 and 2 are closed, the gel in the elongated grooves and the planar structures may be engaged to achieve sealing.

In a still further embodiment, corresponding elongated grooves may be provided in each one of the first, the second, the third and the fourth longitudinal engagement portions, and after the gel is injected into these elongated grooves and the first and second casings are closed, the gel in the facing elongated grooves may be engaged with each other to achieve sealing.

In the exemplary embodiments mentioned above, the elastic substance used as the sealing material is the gel, however, in an alternative embodiment, the elastic substance may be rubber.

In addition, the enclosure further comprises a fastening device 8 for holding the first and second casings 1 and 2 in the closed position.

Although several exemplary embodiments have been shown and described, it would be appreciated by those skilled in the art that various changes or modifications may be made in these embodiments without departing from the principles and spirit of the disclosure, the scope of which is defined in the appended claims and their equivalents.

## Claims

1. An splice enclosure, comprising:
a first casing including a first engagement portion;
a second casing including a second engagement portion, wherein the second casing and the first casing are closed, by engagement of the first and second engagement portions, to form a receiving chamber for receiving a splicer,
**characterized in that**
at least one of the first engagement portion and the second engagement portion is formed with at least one elongated groove for filling sealing material, the at least one elongated groove including at least one broadened portion whose cross section has an enlarged width.

2. The enclosure according to claim 1, **characterized in that**
each elongated groove comprises a first elongated groove, a second elongated groove and a third elongated groove which are connected in order.

3. The enclosure according to claim 2, **characterized in that**
the first engagement portion comprises a first longitudinal engagement portion and a second longitudinal engagement portion which are located respectively at both sides of the receiving chamber along a substantially longitudinal direction of the enclosure;
the second engagement portion comprises a third longitudinal engagement portion and a fourth longitudinal engagement portion which are respectively engaged with the first longitudinal engagement portion and the second longitudinal engagement portion;
the first elongated groove is provided in at least one of the first longitudinal engagement portion and the third longitudinal engagement portion.

4. The enclosure according to claim 3, **characterized in that**
the second elongated groove is provided in at least one of the second longitudinal engagement portion and the fourth longitudinal engagement portion.

5. The enclosure according to claim 3, **characterized in that**
the first elongated groove is provided in one of the first longitudinal engagement portion and the third longitudinal engagement portion;
a first protruding rib corresponding to the first elongated groove is provided on the other of the first longitudinal engagement portion and the third longitudinal engagement portion.

6. The enclosure according to claim 5, **characterized in that**
the second elongated groove is provided in one of the second longitudinal engagement portion and the fourth longitudinal engagement portion;
a second protruding rib corresponding to the second elongated groove is provided on the other of the second longitudinal engagement portion and the fourth longitudinal engagement portion.

7. The enclosure according to claim 3, **characterized in that**
the first elongated groove is provided in one of the first longitudinal engagement portion and the third longitudinal engagement portion, while a first planar structure is formed on the other of the first longitudinal engagement portion and the third longitudinal engagement portion;
the second elongated groove is provided in one of the second longitudinal engagement portion and the fourth longitudinal engagement portion, while a second planar structure is formed on the other of the second longitudinal engagement portion and the fourth longitudinal engagement portion.

8. The enclosure according to any one of claims 2-7, **characterized in that**
the at least one broadened portion is provided at generally central location(s) of the first elongated groove and/or the second elongated groove.

9. The enclosure according to any one of claims 2-7, **characterized in that**
the first engagement portion comprises two first transverse engagement portions which are located at both sides of the receiving chamber substantially in a transverse direction of the enclosure;
the second engagement portion comprises two second transverse engagement portions corresponding to the first transverse engagement portions;
each of the first and second transverse engagement portions is provided with the third elongated groove and is formed into a generally semicircular recess, the first and second transverse engagement portions being engaged to form openings for introducing spliced cables when the first casing and the second casing are closed.

10. The enclosure according to any one of claims 1-7, **characterized in that**
the first casing is connected with the second casing in a turnable manner at side portions in a longitudinal direction of the enclosure.

11. The enclosure according to claim 10, further comprising a fastening device for holding the first and second casings in a closed position.
